# EUROPEAN PATENT SPECIFICATION

(11) **EP 4 348 091 B1**
(45) Date of publication and mention of the grant of the patent: **26.02.2025**
(21) Application number: 22729691.0
(22) Date of filing: 20.05.2022
(51) Int. Cl.: F16L 37/23, F16L 37/35, F16L 37/36

(54) **QUICK COUPLING ASSEMBLY WITH CONNECTION LOCKING PISTON**
SCHNELLKUPPLUNGSANORDNUNG MIT VERBINDUNGSVERRIEGELUNGSKOLBEN
ENSEMBLE RACCORD RAPIDE AVEC PISTON DE VERROUILLAGE DE LIAISON

(30) Priority: 27.05.2021 IT 202100013823
(43) Date of publication of application: 10.04.2024
(73) Proprietor: Stucchi S.p.A., 24040 Pagazzano (BG) (IT)
(72) Inventor: GATTI, Gianmarco, 24040 Pognano (BG) (IT); LA ROSA, Davide, 24040 Casirate d'Adda (BG) (IT); TIVELLI, Sergio, 24050 Cividate al Piano (BG) (IT)
(74) Representative: Mittler, Andrea
(86) International application number: PCT/EP2022/063694
(87) International publication number: WO 2022/248350

(56) References cited:
- US-A1- 2008 252 069
- US-A1- 2020 332 937
- US-B1- 6 830 059

## Description

The present invention relates to a quick coupling assembly with a connection locking piston.

The use of quick coupling assemblies suitable for connecting pressurized hydraulic lines is widespread in the agricultural machinery industry.

The quick coupling assembly comprises a female coupling and a male coupling, wherein the male coupling is suitable for fitting into the female coupling which is associated with a machine, e.g., a tractor, while the male coupling is associated with a piece of equipment, e.g., a weeder, to be connected to the machine.

When the machine is on, there is a minimum pressure (about 10 bar) in the hydraulic system of the machine, and thus in the female coupling. For safety reasons, regulations require that it is not allowed to connect the male coupling to the female coupling with said or higher pressure because otherwise said pressure would be transmitted to the equipment, which could move inadvertently.

For example, when the machine is off, the system pressure remains below 10 bar. In said case, the connection between the male coupling and female coupling is allowed.

US-2020/0332937 describes a quick coupling assembly comprising a female coupling and a male coupling, wherein the male coupling is suitable for being inserted into the female coupling making a pressurized hydraulic connection between the female coupling and the male coupling.

The female coupling comprises an external body fixed to a machine, e.g., a tractor, and an internal body sliding axially into a cavity in the external body.

The female coupling comprises a head, in which the connection to the male coupling occurs, and a back, in which connection to the machine occurs.

The female coupling further comprises a piston suitable for moving radially, i.e. in a direction orthogonal to the axis of the quick coupling assembly along which the connection movement between the female coupling and the male coupling takes place.

The piston is suitable for moving between a first position, in which the connection between the female coupling and the male coupling is permitted, and a second position, in which said connection is prohibited.

The piston comprises a head and a stem. A hole passing along the axis of the piston, i.e. in said radial direction of the assembly, passes through both the head and the stem. There are two gaskets between the piston and the side walls of its seat, one on the head and one on the stem. The through-hole puts the cavity of the female coupling into fluid communication with a chamber located above the piston head.

With reference to the axis of the quick coupling assembly, the piston head is wider than the stem. Under the head, around the upper end of the piston stem, there is a spring which acts in the direction of the piston axis, in particular, it biases the piston to move towards the outside of the female coupling, i.e. it tends to reduce the protrusion of the lower end of the piston stem into the cavity of the female coupling.

A pressure exhaust channel is in communication with the bottom of the piston head, where the spring is located.

The piston moves along its axis as a function of the difference in force induced by the spring (outward thrust) and the hydraulic pressure (inward thrust) on the piston head.

The spring is calibrated so that beyond a pressure threshold value in the female coupling cavity, the piston moves into the second position, i.e. towards the inside, preventing the sliding of the internal sliding body of the female coupling; the connection between the female coupling and the male coupling cannot take place.

If the pressure in the female coupling cavity is below said threshold value, the piston is in said first position; the connection between the female coupling and the male coupling can take place.

Disadvantageously, the calibration of the spring is very complex; the dimensions of the stem and the head must be taken into account with accuracy.

Furthermore, the spring seat is very small because the female coupling cavity must have sufficient space for the internal body of the female coupling to slide. Consequently, it is not possible to mount springs with excessive load, i.e. the piston can remain in a useful position for connection only for low pressure values, lower than 10 bar of normal use.

Finally, two gaskets must be provided, one on the head and one on the stem: disadvantageously, wear rapidly reduces the precision of the piston actuation. The replacement of the gaskets and the spring is very complicated.

It is the object of the present invention to make a quick coupling assembly suitable for connecting hydraulic lines under pressure, comprising a female coupling and a male coupling suitable for inserting into the female coupling, wherein a piston is provided which prohibits the connection in case of pressure exceeding a threshold value, wherein said piston moves in a radial direction, i.e. orthogonally relative to the axial direction of connection between the female coupling and the male coupling, wherein the piston can be easily associated with the female coupling.

It is a further object of the present invention for the piston to be easy to actuate and maintain the actuating threshold value over time.

It is yet another object of the present invention that the piston seat is non-invasive, i.e., easily integrated into the female coupling without forcing complicated and costly design changes to the female coupling.

According to the invention, said and further objects are achieved by a quick coupling assembly as defined in claim 1.

Advantageously, the hydraulic pressure which pushes the full piston into the second position, the locked position, acts in only one direction, completely over the full piston head. Only the spring acts in the opposite direction.

The sizing of the full piston and spring is simple, having to consider in practice only the dimensions of the full piston in its radial seat.

Maintenance is simplified because there is a single gasket on the full piston, which is the gasket on the external edge of the head.

These and other features of the present invention will become further apparent from the following detailed description of practical embodiments thereof illustrated by way of non-limiting example in the accompanying drawings, in which:
figure 1 shows a side view of a quick coupling assembly according to the present invention, wherein a male coupling is separated from a female coupling;
figure 2 is a rear view of the assembly;
figure 3 shows a cross-section view taken along the line III-III of figure 1;
figure 4 shows a cross-section view taken along the line IV-IV of figure 2;
figure 5 shows a cross-section view similar to that of figure 3, in a first connection position, wherein there is a pressure in the female coupling which is less than a threshold value;
figure 6 shows a cross-section view similar to the one of figure 4, wherein the assembly is in the same position as in figure 5;
figure 7 shows a cross-section view similar to that of figure 3, in a second coupling position, wherein there is a pressure in the female coupling which is less than the threshold value;
figure 8 shows a cross-section view similar to the one of figure 4, wherein the assembly is in the same position as in figure 7;
figure 9 shows a cross-section view similar to that of figure 3, in a third connection position, wherein there is a pressure in the female coupling which is less than the threshold value;
figure 10 shows a cross-section view similar to the one of figure 4, wherein the assembly is in the same position as in figure 9;
figure 11 shows a cross-section view similar to that of figure 3, in a fourth connection position, wherein there is a pressure in the female coupling which is less than the threshold value;
figure 12 shows a cross-section view similar to the one of figure 4, wherein the assembly is in the same position as in figure 11;
figure 13 shows a cross-section view similar to the one of figure 3, wherein the connection is prohibited because there is a pressure equal to or greater than the threshold value in the female coupling;
figure 14 shows a cross-section view similar to the one of figure 4, wherein the assembly is in the same position as in figure 13;
figure 15 shows the enlarged content of circle A of figure 5;
figure 16 shows the enlarged content of circle B of figure 13.

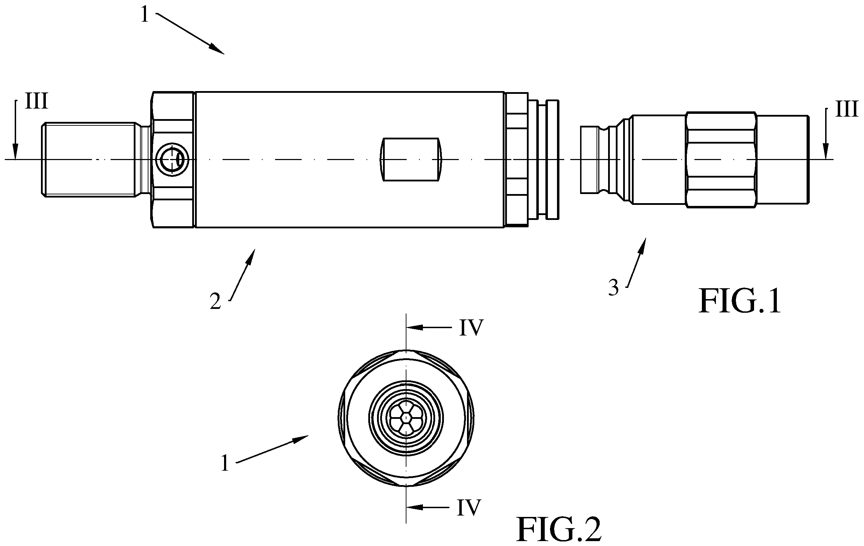

A quick coupling assembly 1 suitable for connecting pressurized hydraulic lines according to the present invention comprises a female coupling 2 and a male coupling 3 which can be connected to the female coupling 2 (figure 1).

The female coupling 2 is associated with a machine (not shown), e.g., a tractor, while the male coupling 3 is associated with a piece of working equipment, e.g., a weeder.

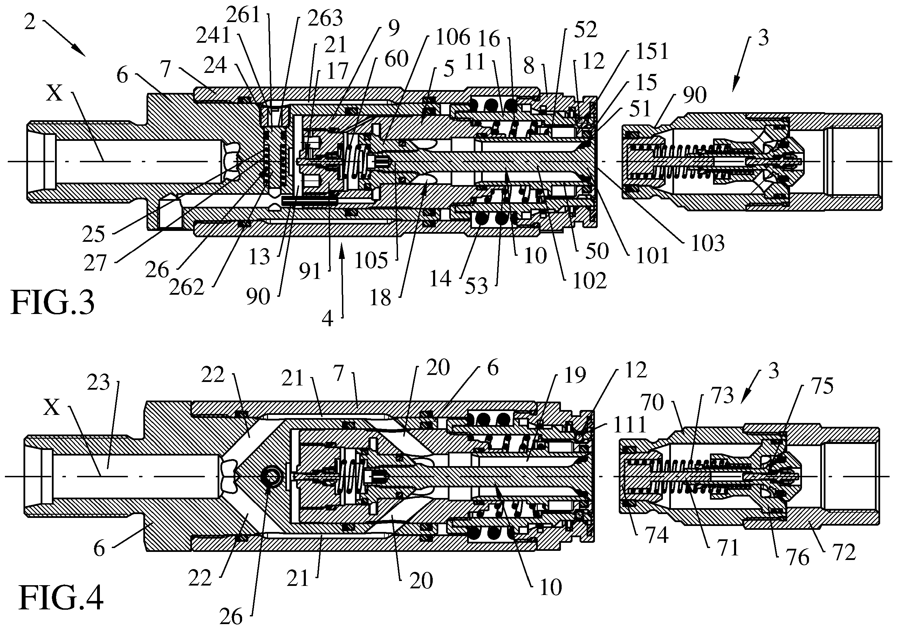

With particular reference to figures 3 and 4, the female coupling 2 comprises an external part 4 integral with the machine, and an internal part 5 sliding along a connection axis X inside the external part 4.

The external part 4 of the female coupling 2 comprises a junction 6 for connecting to the machine, a female body 7 and a ring nut 8 integral with each other.

The internal part 5 of the female coupling 2 comprises a sliding body 9, a shutter 10, a ring nut holder 11 suitable for containing balls 12 in a locking seat 111 (figure 4), and a pin 13 integral with the sliding body 9 with which a pressure exhaust valve 17 is also associated.

The shutter 10 has a head 101 and a stem 102, wherein the head 101 is in one piece with the stem 102. The head 101 comprises a flat end 103 facing the male coupling 3; the head 101 expands radially toward the flat end 103.

A spring 14 is provided between the external portion 4 and the internal portion 5 suitable for keeping the female coupling 2 in the rest position when it is separated from the male coupling 3.

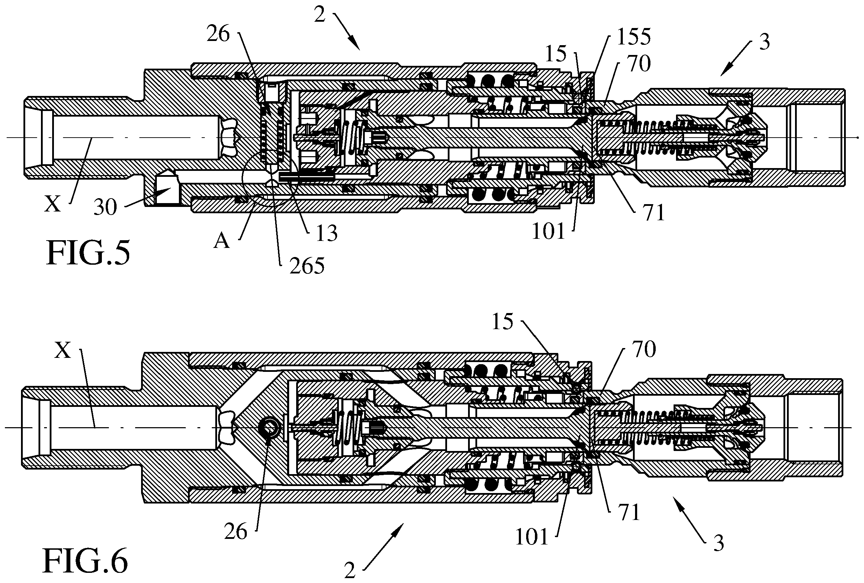

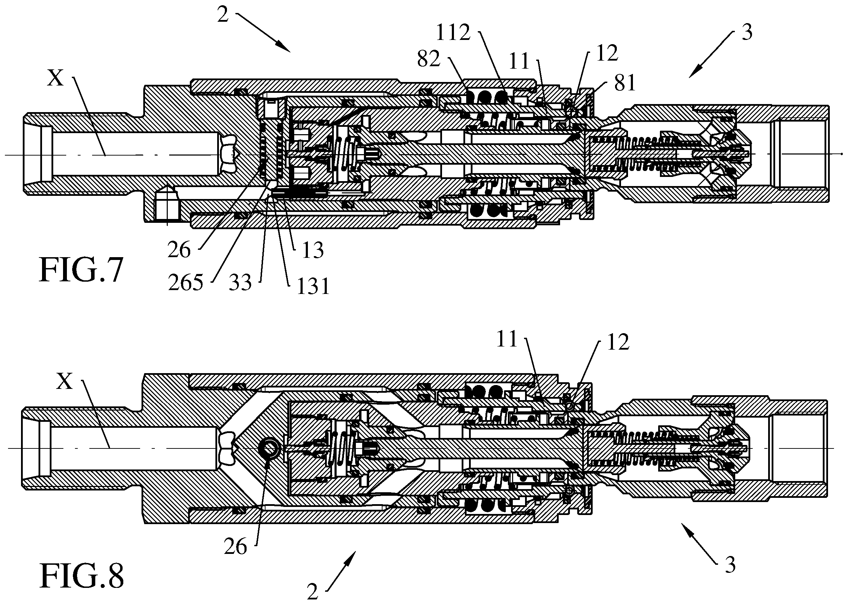

A cup 15, which is held in place by a spring 16, is suitable for sliding inside the ring nut holder 11. The cup 15 comprises a thrust portion 155 (figure 5) suitable for moving the balls 12 into an exhaust seat 81 of the ring nut 8 (figure 7).

The internal portion 5 also comprises a sleeve 50 through which the stem 102 of the coupling 10 passes. The sleeve 50 is suitable for sliding axially, i.e. along the connection axis X, relative to both the sliding body 9 and the coupling 10.

The sleeve 50 has an end 51 which interacts in a sealing manner with the head 101 of the shutter 10, wherein a spring 53 is suitable for forcing said seal. The sleeve 50 comprises a radial shim 52 suitable for receiving in abutment a complementary shim 151 of the cup 15, which is suitable for canceling the seal of the sleeve 50 on the shutter 10, as will be explained in greater detail below.

The pressure exhaust valve 17 is associated with a back 91 of the sliding body 9, wherein said back 91 is elastically associated with a spring 60 to a rear end 105 of the coupling 10 by means of a guide body 106 integral with the shutter 10.

The external part 4 and the internal part 5 are shaped to form a single chamber 18, in which the hydraulic pressure generated by the machine, of at least roughly 10 bars, is present.

Said single chamber 18 comprises (figure 4) a head chamber 19 about the shutter 10 (partly inside the sleeve 50), two first oblique chambers 20 suitable to take the working pressure outside the internal part 5, an external chamber 21 between the junction 6 and the female body 7, two second oblique chambers 22 and a rear chamber 23.

The second oblique chambers 22 connect the external chamber 21 to the rear chamber 23, which is connected to the machine.

Observing figure 4, from right to left, i.e. from the head to the back of the female coupling 2, the first oblique chambers 20 diverge relative to the connection axis X, while the second oblique chambers 22 converge relative to the same connection axis X.

The first oblique chambers 20 pass through both the sliding body 9 and the junction 6, which is also crossed by the second oblique chambers 22.

The external chamber 21 is in communication with a through chamber 241 of a sleeve 24 integral with the junction 6, which provides a radial seat 25 for a full piston 26 (figure 3).

It is worth noting that radial means a direction orthogonal to that of the connection axis X.

The sleeve 24 is suitable for making an upper limit stop of the full piston 26.

The full piston 26 comprises a head 261 and a stem 262.

Full piston 26 means a piston with a full head and stem, i.e. without through cavities, in particular without a through cavity along the radial direction in which the piston moves, between the head of the piston and the bottom of the stem.

A spring 27, inserted into a chamber 29, is suitable for pushing the full piston 26 into a stop towards the sleeve 24.

An upper surface 263 of the head 261 of the full piston 26 faces the through chamber 241 of the sleeve 24.

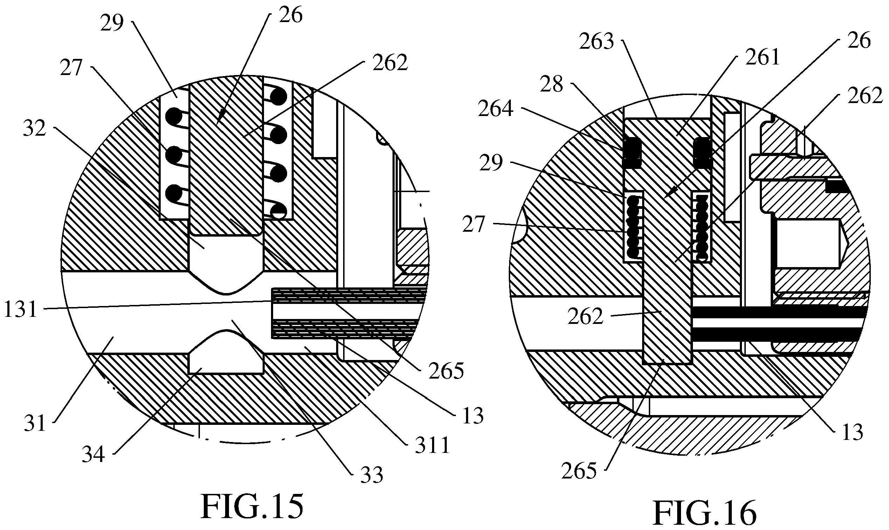

The head 261 of the full piston 26 (figure 16) provides a lateral seat 264 for a gasket 28 suitable for ensuring sealing between the through chamber 241, i.e., the single chamber 18, and the chamber 29 of the spring 27, wherein said radial seat 25 is in hydraulic connection with an exhaust duct 30 formed in the junction 6.

As mentioned above the full piston 26 has no through cavities, i.e. there is a pressure seal between the single chamber 18 and exhaust duct 30.

The exhaust duct 30 is hydraulically connected to a pressure exhaust chamber 90 which faces the back of the internal portion 5 in which the pressure exhaust valve 17 is provided.

The exhaust duct 30 (figure 15) comprises an axial oriented channel 31 parallel to the connection axis X, and a radial oriented channel 32 orthogonal to said axial oriented channel 31.

The radial channel 32 is adapted to guide a bottom 265 of the stem 262.

The pin 13 has a longitudinal development in the axial direction and is suitable for sliding in the axial oriented channel 31. Through the radial oriented channel 32, the stem 262 of the full piston 26 is suitable for flowing into the axial oriented channel 31 at a junction 33. The axial oriented channel 31 comprises a portion of the head 311 adjacent to the junction 33.

The full piston 26 is suitable for sliding between a first position (figure 15), in which the piston head 261 abuts the limit stop on the sleeve 24 and the bottom 265 of the stem 262 is completely within the radial oriented channel 32, i.e., does not protrude into the axial oriented channel 31 at the junction 33, and a second position, in which the bottom 265 protrudes from the radial oriented channel 32 into the axial oriented channel 31 at the junction 33. Figure 16 shows the bottom 265 which connects to a seat 34 arriving at a lower limit stop; a portion of the stem 262 obstructs the axial oriented channel 31 in the junction 33.

The pin 13, guided by the sliding body 9, is suitable for sliding between a first position (figure 15), in which a free end 131 of the pin 13 is completely inside the head portion 311 of the axial oriented duct 31, and a second position (figure 7) in which the free end 131 protrudes from the head portion 311 in the junction 33.

If the full piston 26 is in the second position, the free end 131 of the pin 13 cannot enter the junction 33, i.e., its axial movement toward the junction 33 is limited by the stem 262 of the full piston 26, which then obstructs the junction 33.

The male coupling 3 (figure 4) comprises a male body 70, a shutter 71 sliding axially into the male body 70, and a junction 72 suitable for connecting to a piece of equipment (not shown).

The shutter 71 is also suitable for sliding relative to an internal body 76 housed in and integral with the male body 70.

A spring 73 holds a head 74 of the shutter 71 in a sealing manner on the male body 70, while an internal valve 75 is suitable for putting the male coupling 3 into fluid communication with the equipment (not shown).

The radial ends of the shutter 71 and the male body 70 of the male coupling 3 form a flat face of the male coupling 3.

The ends of the shutter 10 and the cup 15 of the female coupling 2 form a flat face of the female coupling 2.

By observing the figures 5-12 in sequence, it is possible to understand how the connection occurs if the pressure in the single chamber 18 is below a threshold value, e.g., when the machine is off, namely in the case in which connection between the female coupling 2 and the male coupling 3 is allowed.

The threshold value preferably coincides with the operating pressure of the machine, typically 10 bar.

Highlighting that a flat-face type assembly 1 is being described, when the flat face of the male coupling 3 is pushed (by an operator) against the flat face of the female coupling 2, the two shutters 10, 71 come into contact as well as the male body 70 with the cup 15 (figures 5, 6).

The male body 70 axially pushes the cup 15 backwards (towards the bottom of the female coupling 2, i.e., leftwards when looking at the figures), which moves the balls 12 from their locking seat 111 to the exhaust seat 81 of the ring nut 8 (figure 7).

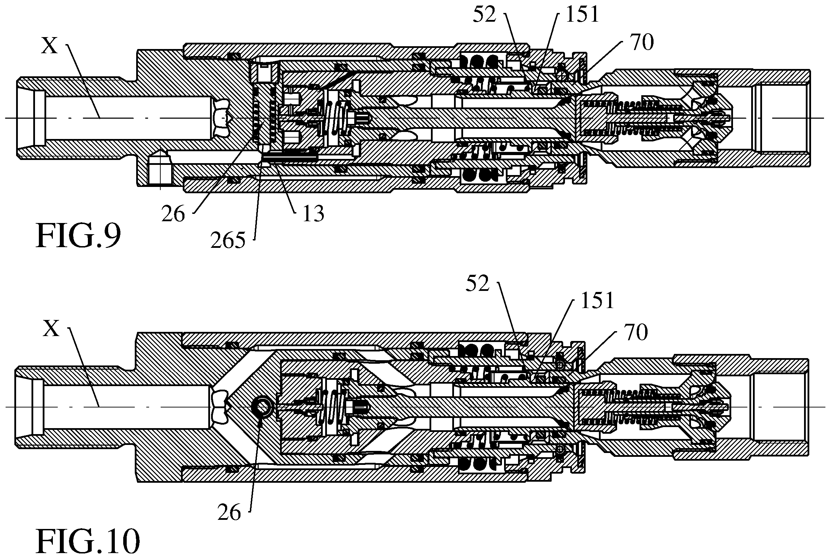

The cup 15, by means of the balls 12 which move the ring nut holder 11, also pushes back the sliding body 9 which is integral with the ring nut holder 11; in the absence of overpressure beyond the defined threshold value, the pin 13 can move axially in the junction 33, under the full piston 26 stopped in the first position (figures 7, 9).

The thrust of the cup 15 is opposed to a ring nut spring 82 which acts on the ring nut holder 11 through a shim 112 (figure 7). Once the balls 12 are in the exhaust seat 81 of the ring nut 8, the ring nut holder 11 is in a stable position in which the forward thrust (to the right as seen in figure 7) of the ring nut spring 82 is balanced by the contrast applied by the exhaust seat 81 of the ring nut 8.

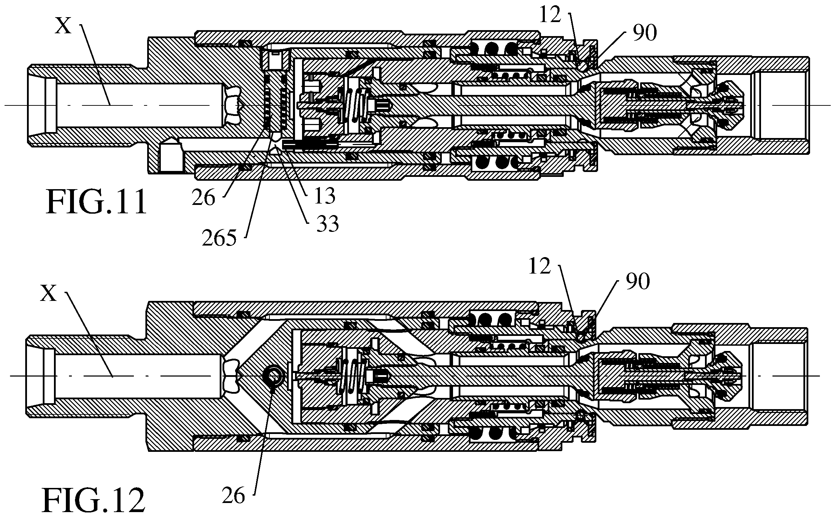

Continuing the insertion of the male body 70 into the female coupling 2, in particular sliding inside the ring nut 11 (figures 9, 10), the radial shim 151 of the cup 15 comes into contact with the radial shim 52 of the sleeve 50, which retracts thus opening the hydraulic line between the female coupling 2 and the male coupling 3. The balls 12 from the exhaust seat 81 of the ring nut 8, pushed by the ring nut spring 82, are inserted into an external seat 90 of the male body 70 thus making the connection stable (figures 11, 12). The sliding body 9, fed by the ring nut holder 11, is moved forward again (rightwards observing the figures) thus freeing the junction 33 from the pin 13 again.

In the absence of pressure above the threshold value in the single chamber 18, the full piston 26 is held in the first position without interfering with the connection between the female coupling 2 and the male coupling 3.

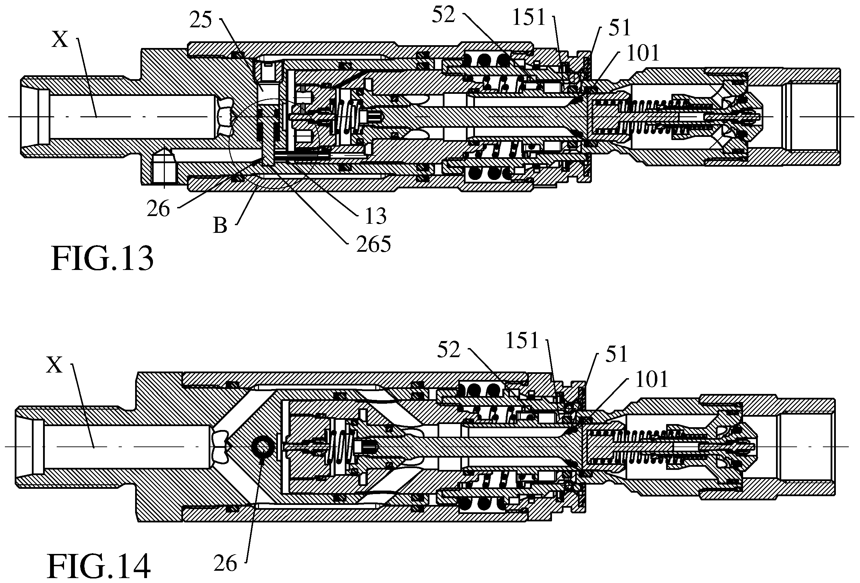

If the pressure in the single chamber 18 is higher than the threshold value (figures 13, 14 and 16), again starting from a situation of a male coupling 3 separated from the female coupling 2 as in figures 3, 4, even before starting the connection attempt, the full piston 26 slides into the second position obstructing the axial oriented channel 31 at the junction 33.

Consequently, if the operator tries to force the insertion of the male coupling 3 into the female coupling 2, at a given point it will find a block generated by the pin 13 which abuts the side of the stem 262 of the full piston 26, thus occluding the axial oriented channel 31.

As the sliding body 9 cannot retract further, the cup 15 does not interact with the sleeve 50 (figures 9, 10), which thus remains sealed to the head 101 of the shutter 10.

If the overpressure in female coupling 2 is not relieved, e.g., by switching off the machine, the connection between the male coupling 3 and the female coupling 2 cannot take place.

Advantageously, the pressure which pushes the full piston 26 into the second position, the locked position, acts in only one direction, completely on the upper surface 263 of the head 261 of the full piston 26.

Only the spring 27 acts in the opposite direction.

The sealing between the chamber 29 of the spring 27 and the single chamber 18 is guaranteed by the gasket 28 on the side edge of the head 261 alone.

Advantageously, the sizing of the full piston 26 and spring 27 is simple, because in practice only the dimensions of the full piston 26 in its radial seat 25 need to be considered, with no through cavities complicating design calculations.

The use of oblique channels 20, 22 allows easily taking the pressure outside the sliding body 9 without needing to pierce the full piston 26, which is, therefore, more solid, stable and responsive to overpressure.

Advantageously, the full piston 26 moves by even intersecting the connection axis X without limiting the stroke of the sliding body 9. A wall for the pressure exhaust valve 17 is provided between the radial seat 25 of the full piston 26 and the sliding body 9.

The radial seat 25 of the full piston 26 can be enlarged to use heavily loaded springs 27.

Maintenance is simplified because there is a single gasket on the full piston 26, which is the gasket 28 on the external edge of the head 261.

## Claims

1. A quick coupling assembly (1) suitable for connecting hydraulic lines under pressure, comprising a female coupling (2) and a male coupling (3), which is connectable to the female coupling (2), wherein the female coupling (2) is associable with a machine suitable for generating hydraulic pressure, while the male coupling (3) is associable with an equipment,
wherein the female coupling (2) comprises an external part (4) which is fixable to the machine, a piston (26) and an internal part (5) sliding along a connection axis (X) inside the external part (4), wherein the connection axis (X) defines an axial direction,
the external part (4) and the internal part (5) are shaped so as to create a single chamber (18) suitable for maintaining the hydraulic pressure generated by the machine,
wherein the external part (4) comprises a radial seat (25) for the piston (26) suitable for moving radially between a first position in which the connection between the female coupling (2) and the male coupling (3) is allowed, and a second position, in which the connection between the female coupling (2) and the male coupling (3) is forbidden due to the interference between the internal part (5) and the piston (26),
wherein the piston (26) assumes the second position when in the female coupling (2) there is a hydraulic pressure equal to or greater than a threshold value,
wherein the piston (26) comprises a head (261) and a stem (262), wherein the head (261) provides a lateral seat (264) for a gasket (28) suitable for guaranteeing the seal between the single chamber (18) and a chamber (29) housing a spring (27) suitable for forcing the piston (26) into the first position, wherein the chamber (29) housing the spring (27) is in hydraulic connection with an exhaust duct (30),
**characterized in that**
the piston (26) is a full piston without through cavities.

2. Assembly (1) according to claim 1, **characterized in that** the exhaust duct (30) comprises an axial oriented duct (31) and a radial oriented duct (32) which converges into the axial oriented duct (31) at a junction (33) of the exhaust duct (30),
wherein a pin (13) integral with the internal part (5) slides along the axial oriented duct (31), while a bottom (265) of the stem (262) slides along the radial oriented duct (32),
wherein in the first position of the full piston (26) the bottom (265) of the stem (262) is completely inside the radial oriented duct (32), while in the second position of the full piston (26) the bottom (265) protrudes from the radial oriented duct (32) into the axial oriented duct (31) at the junction (33) thus preventing the pin (13) from sliding into the junction (33) and accordingly the connection between the female coupling (2) and the male coupling (3).

3. Assembly (1) according to claim 2, **characterized in that** the single chamber (18) comprises a head chamber (19), two first oblique chambers (20), an external chamber (21) between the external part (4 ) and the internal part (5), two second oblique chambers (22) and a rear chamber (23), wherein the two first oblique chambers (20) connect the head chamber (19) and the external chamber (21), and wherein the second oblique chambers (22) hydraulically connect the external chamber (21) and the rear chamber (23) which is connected to the machine.

4. Assembly (1) according to claim 3, **characterized in that** the external chamber (21) is in hydraulic connection with a through chamber (241) of a sleeve (24) integral with the external part (4), wherein the sleeve (24) is suitable for realizing an upper limit stop of the full piston (26) forced by the spring (27), wherein an upper surface (263) of the head (261) of the full piston (26) faces the through chamber (241) of the sleeve (24), wherein the hydraulic pressure of the machine acts directly on said upper surface (263) in the opposite direction with respect to the force of the spring (27).

5. Assembly (1) according to claim 2, **characterized in that** the pin (13) is suitable for sliding between a first position in which a free end (131) of the pin (13) is completely inside a head portion (311) of the axial oriented duct (31), and a second position in which the free end (131) protrudes from the head portion (311) in the junction (33).

6. Assembly (1) according to claim 3, **characterized in that** from the head to the back of the female coupling (2), the first oblique chambers (20) diverge with respect to the connection axis (X), while the second oblique chambers (22) converge with respect to the same connection axis (X).

7. Assembly (1) according to claim 2, **characterized in that**
the external part (4) comprises, integral with each other, a junction (6) for connecting to the machine, a female body (7) and a ring nut (8),
the internal part (5) comprises a sliding body (9), a shutter (10), a ring nut holder (11) suitable for containing balls (12), wherein the pin (13) is integral with the sliding body (9).

8. Assembly (1) according to claim 7, **characterized in that** the first oblique chambers (20) pass through both the sliding body (9) and the junction (6) which is also crossed by the second oblique chambers (22).

## Patentansprüche

1. Schnellkupplungsanordnung (1), die zum Verbinden von unter Druck stehenden Hydraulikleitungen geeignet ist, mit einer Buchse (2) und einem Stecker (3), der mit der Buchse (2) verbindbar ist, wobei die Buchse (2) mit einer Maschine verbindbar ist, die zum Erzeugen von Hydraulikdruck geeignet ist, während der Stecker (3) mit einer Ausrüstung verbindbar ist,
wobei die Buchse (2) ein Außenteil (4), das an der Maschine befestigbar ist, einen Kolben (26) und ein Innenteil (5) aufweist, das entlang einer Verbindungsachse (X) im Innern des Außenteils (4) gleitet, wobei die Verbindungsachse (X) eine axiale Richtung definiert,
wobei das Außenteil (4) und das Innenteil (5) so geformt sind, dass sie eine einzelne Kammer (18) bilden, die geeignet ist, den von der Maschine erzeugten hydraulischen Druck aufrechtzuerhalten,
wobei das Außenteil (4) einen radialen Sitz (25) für den Kolben (26) aufweist, der sich radial zwischen einer ersten Position, in der die Verbindung zwischen der Buchse (2) und dem Stecker (3) zugelassen wird, und einer zweiten Position bewegen kann, in der die Verbindung zwischen der Buchse (2) und dem Stecker (3) aufgrund der Beeinflussung zwischen dem Innenteil (5) und dem Kolben (26) verhindert wird,
wobei der Kolben (26) die zweite Position einnimmt, wenn in der Buchse (2) ein Hydraulikdruck herrscht, der gleich oder größer als ein Schwellenwert ist,
wobei der Kolben (26) einen Kopf (261) und einen Schaft (262) aufweist, wobei der Kopf (261) einen seitlichen Sitz (264) für eine Dichtung (28) bereitstellt, die dazu geeignet ist, die Abdichtung zwischen der einzelnen Kammer (18) und einer Kammer (29) zu gewährleisten, in der eine Feder (27) untergebracht ist, die dazu geeignet ist, den Kolben (26) in die erste Position zu drücken,
wobei die Kammer (29), in der die Feder (27) untergebracht ist, in hydraulischer Verbindung mit einem Auslasskanal (30) steht,
**dadurch gekennzeichnet, dass**
der Kolben (26) ein Vollkolben ohne durchgehende Hohlräume ist.

2. Anordnung (1) nach Anspruch 1, **dadurch gekennzeichnet, dass** der Auslasskanal (30) einen axial ausgerichteten Kanal (31) und einen radial ausgerichteten Kanal (32) aufweist, der an einer Verbindungsstelle (33) des Auslasskanals (30) in den axial ausgerichteten Kanal (31) mündet,
wobei ein Stift (13), der mit dem Innenteil (5) einstückig ist, entlang des axial ausgerichteten Kanals (31) gleitet, während ein Boden (265) des Schafts (262) entlang des radial ausgerichteten Kanals (32) gleitet,
wobei sich in der ersten Position des Vollkolbens (26) der Boden (265) des Schafts (262) vollständig innerhalb des radial ausgerichteten Kanals (32) befindet, während in der zweiten Position des Vollkolbens (26) der Boden (265) aus dem radial ausgerichteten Kanal (32) in den axial ausgerichteten Kanal (31) an der Verbindungsstelle (33) hineinragt, wodurch verhindert wird, dass der Stift (13) in die Verbindungsstelle (33) und dementsprechend in die Verbindung zwischen der Buchse (2) und dem Stecker (3) gleitet.

3. Anordnung (1) nach Anspruch 2, **dadurch gekennzeichnet, dass** die einzelne Kammer (18) eine Kopfkammer (19), zwei erste schräge Kammern (20), eine Außenkammer (21) zwischen dem Außenteil (4) und dem Innenteil (5), zwei zweite schräge Kammern (22) und eine hintere Kammer (23) aufweist, wobei die beiden ersten schrägen Kammern (20) die Kopfkammer (19) und die Außenkammer (21) verbinden und wobei die zweiten schrägen Kammern (22) die Außenkammer (21) und die hintere Kammer (23), die mit der Maschine verbunden ist, hydraulisch verbinden.

4. Anordnung (1) nach Anspruch 3, **dadurch gekennzeichnet, dass** die Außenkammer (21) in hydraulischer Verbindung mit einer Durchgangskammer (241) einer Hülse (24) steht, die mit dem Außenteil (4) einstückig ist, wobei die Hülse (24) geeignet ist, einen oberen Anschlag des Vollkolbens (26) zu realisieren, der durch die Feder (27) gedrückt wird, wobei eine obere Fläche (263) des Kopfes (261) des Vollkolbens (26) der Durchgangskammer (241) der Hülse (24) zugewandt ist, wobei der Hydraulikdruck der Maschine direkt auf die obere Fläche (263) in entgegengesetzter Richtung zur Kraft der Feder (27) wirkt.

5. Anordnung (1) nach Anspruch 2, **dadurch gekennzeichnet, dass** der Stift (13) zwischen einer ersten Position, in der ein freies Ende (131) des Stifts (13) vollständig innerhalb eines Kopfabschnitts (311) des axial ausgerichteten Kanals (31) liegt, und einer zweiten Position, in der das freie Ende (131) aus dem Kopfabschnitt (311) in der Verbindung (33) herausragt, verschiebbar ist.

6. Anordnung (1) nach Anspruch 3, **dadurch gekennzeichnet, dass** vom Kopf bis zum hinteren Teil der Buchse (2) die ersten schrägen Kammern (20) in Bezug auf die Verbindungsachse (X) divergieren, während die zweiten schrägen Kammern (22) in Bezug auf dieselbe Verbindungsachse (X) konvergieren.

7. Anordnung (1) nach Anspruch 2, **dadurch gekennzeichnet, dass**
das Außenteil (4) einstückig miteinander eine Verbindungsstelle (6) zum Anschluss an die Maschine, einen Buchsenkörper (7) und eine Ringmutter (8) umfasst,
der Innenteil (5) einen Gleitkörper (9), einen Verschluss (10) und einen Ringmutterhalter (11) umfasst, der zur Aufnahme von Kugeln (12) geeignet ist, wobei der Stift (13) einstückig mit dem Gleitkörper (9) ist.

8. Anordnung (1) nach Anspruch 7, **dadurch gekennzeichnet, dass** die ersten schrägen Kammern (20) sowohl durch den Gleitkörper (9) als auch durch die Verbindungsstelle (6) verlaufen, die auch von den zweiten schrägen Kammern (22) durchquert wird.

## Revendications

1. Ensemble de raccord rapide (1) approprié pour raccorder des conduites hydrauliques sous pression, comprenant un raccord femelle (2) et un raccord mâle (3), qui peut être raccordé au raccord femelle (2), dans lequel le raccord femelle (2) peut être associé à une machine appropriée pour générer de la pression hydraulique, alors que le raccord mâle (3) peut être associé à un équipement,
dans lequel le raccord femelle (2) comprend une partie externe (4) qui peut être fixée sur la machine, un piston (26) et une partie interne (5) coulissant le long d'un axe de raccordement (X) à l'intérieur de la partie externe (4), dans lequel l'axe de raccordement (X) définit une direction axiale,
la partie externe (4) et la partie interne (5) sont formées afin de créer une chambre (18) unique appropriée pour maintenir la pression hydraulique générée par la machine,
dans lequel la partie externe (4) comprend un siège radial (25) pour le piston (26) approprié pour se déplacer radialement entre une première position dans laquelle le raccordement entre le raccord femelle (2) et le raccord mâle (3) est autorisé, et une deuxième position, dans laquelle le raccordement entre le raccord femelle (2) et le raccord mâle (3) est interdit en raison de l'interférence entre la partie interne (5) et le piston (26),
dans lequel le piston (26) adopte la deuxième position lorsque, dans le raccord femelle (2), il y a une pression hydraulique égale ou supérieure à une valeur de seuil,
dans lequel le piston (26) comprend une tête (261) et une tige (262), dans lequel la tête (261) fournit un siège latéral (264) pour un joint (28) approprié pour garantir l'étanchéité entre la chambre (18) unique et une chambre (29) logeant un ressort (27) approprié pour forcer le piston (26) dans la première position, dans lequel la chambre (29) logeant le ressort (27) est en raccordement hydraulique avec un conduit d'échappement (30),
**caractérisé en ce que** :
le piston (26) est un piston plein sans cavités débouchantes.

2. Ensemble (1) selon la revendication 1, **caractérisé en ce que** le conduit d'échappement (30) comprend un conduit orienté de manière axiale (31) et un conduit orienté de manière radiale (32) qui converge dans le conduit orienté de manière axiale (31) au niveau d'une jonction (33) du conduit d'échappement (30),
dans lequel une broche (13) solidaire avec la partie interne (5) coulisse le long du conduit orienté de manière axiale (31), alors qu'un fond (265) de la tige (262) coulisse le long du conduit orienté de manière axiale (32),
dans lequel, dans la première position du piston plein (26), le fond (265) de la tige (262) est complètement à l'intérieur du conduit orienté de manière radiale (32), alors que dans la deuxième position du piston plein (26), le fond (265) fait saillie du conduit orienté de manière radiale (32) dans le conduit orienté de manière axiale (31) à la jonction (33), empêchant ainsi la broche (13) de coulisser dans la jonction (33) et par conséquent le raccordement entre le raccord femelle (2) et le raccord mâle (3).

3. Ensemble (1) selon la revendication 2, **caractérisé en ce que** la chambre (18) unique comprend une chambre de tête (19), deux premières chambres obliques (20), une chambre externe (21) entre la partie externe (4) et la partie interne (5), deux deuxièmes chambres obliques (22) et une chambre arrière (23), dans lequel les deux premières chambres obliques (20) raccordent la chambre de tête (19) et la chambre externe (21), et dans lequel les deuxièmes chambres obliques (22) raccordent, de manière hydraulique, la chambre externe (21) et la chambre arrière (23) qui est raccordée à la machine.

4. Ensemble (1) selon la revendication 3, **caractérisé en ce que** la chambre externe (21) est en raccordement hydraulique avec une chambre débouchante (241) d'un manchon (24) solidaire avec la partie externe (4), dans lequel le manchon (24) est approprié pour réaliser une fin de course supérieure du piston plein (26) forcé par le ressort (27), dans lequel une surface supérieure (263) de la tête (261) du piston plein (26) fait face à la chambre débouchante (241) du manchon (24), dans lequel la pression hydraulique de la machine agit directement sur ladite surface supérieure (263) dans la direction opposée par rapport à la force du ressort (27).

5. Ensemble (1) selon la revendication 2, **caractérisé en ce que** la broche (13) est appropriée pour coulisser entre une première position dans laquelle une extrémité libre (131) de la broche (13) est complètement à l'intérieur d'une partie de tête (311) du conduit orienté de manière axiale (31) et une deuxième position dans laquelle l'extrémité libre (131) fait saillie de la partie de tête (311) dans la jonction (33).

6. Ensemble (1) selon la revendication 3, **caractérisé en ce que**, de la tête à l'arrière du raccord femelle (2), les premières chambres obliques (20) divergent par rapport à l'axe de raccordement (X), alors que les deuxièmes chambres obliques (22) convergent par rapport au même axe de raccordement (X).

7. Ensemble (1) selon la revendication 2, **caractérisé en ce que** :
la partie externe (4) comprend, de manière solidaire entre eux, une jonction (6) pour se raccorder à la machine, un corps femelle (7) et un écrou à oeil (8),
la partie interne (5) comprend un corps coulissant (9), un obturateur (10), un support d'écrou à oeil (11) approprié pour contenir des billes (12), dans lequel la broche (13) est solidaire avec le corps coulissant (9).

8. Ensemble (1) selon la revendication 7, **caractérisé en ce que** les premières chambres obliques (20) traversent à la fois le corps coulissant (9) et la jonction (6) qui est également traversée par les deuxièmes chambres obliques (22).
